# FASCICULE DE BREVET EUROPEEN

(11) **EP 4 259 457 B1**
(45) Date de publication et mention de la délivrance du brevet: **16.07.2025**
(21) Numéro de dépôt: 21823637.0
(22) Date de dépôt: 15.11.2021
(51) Int. Cl.: B60C 11/03, B60C 11/11, B60C 9/00

(54) **PNEUMATIQUE DONT LA BANDE DE ROULEMENT COMPORTE DES FIBRES ORIENTEES**
REIFEN MIT EINER LAUFFLÄCHE MIT AUSGERICHTETEN FASERN
TIRE, THE TREAD OF WHICH COMPRISES ORIENTED FIBERS

(30) Priorité: 11.12.2020 FR 2013050
(43) Date de publication de la demande: 18.10.2023
(73) Titulaire: COMPAGNIE GENERALE DES ETABLISSEMENTS MICHELIN, 63000 Clermont-Ferrand (FR)
(72) Inventeur: MANSUY, Philippe, 63040 CLERMONT-FERRAND Cedex 9 (FR); GUELON, Sandra, 63040 CLERMONT-FERRAND Cedex 9 (FR); HEBERT, Stéphane, 63040 CLERMONT-FERRAND Cedex 9 (FR); DAYET, Patrick, 63040 CLERMONT-FERRAND Cedex 9 (FR)
(74) Mandataire: M.F.P. Michelin
(86) Numéro de dépôt international: PCT/FR2021/052008
(87) Numéro de publication internationale: WO 2022/123132

(56) Documents cités:
- EP-A1- 3 031 622
- EP-A1- 3 103 657
- WO-A1-02/090094
- US-B1- 6 472 461
- MORTAZAVIAN SEYYEDVAHID ET AL: "Effects of fiber orientation and anisotropy on tensile strength and elastic modulus of short fiber reinforced polymer composites", SCIENCE DIRECT - COMPOSITES: PART B, 8 December 2014 (2014-12-08), www.elsevier.com/locate/compositesb, pages 1 - 14, XP055821290, Retrieved from the Internet <URL:https://reader.elsevier.com/reader/sd/pii/S1359836814005642?token=33D99D617C4B3C6BDC374E4848DB9D2F34812883D33FC794C8FCDC50105A2369051E18F4CC53431A9F129A54FD4FC5C6&originRegion=eu-west-1&originCreation=20210706052630> [retrieved on 20210706]

## Description

La présente invention concerne un pneumatique, à armature de carcasse radiale et plus particulièrement un pneumatique destiné à équiper des véhicules portant de lourdes charges, tels que, par exemple les camions, tracteurs, remorques ou bus routiers.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

La direction circonférentielle du pneumatique, ou direction longitudinale, est la direction correspondant à la périphérie du pneumatique et définie par la direction de roulement du pneumatique.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

La direction transversale ou axiale du pneumatique est parallèle à l'axe de rotation du pneumatique. Une distance axiale est mesurée selon la direction axiale. L'expression « axialement intérieur à, respectivement axialement extérieur à » signifie « dont la distance axiale mesurée depuis le plan équatorial est inférieure à, respectivement supérieure à ».

La direction radiale est une direction coupant l'axe de rotation du pneumatique et perpendiculaire à celui-ci. Une distance radiale est mesurée selon la direction radiale. L'expression « radialement intérieur à, respectivement radialement extérieur à » signifie « dont la distance radiale mesurée depuis l'axe de rotation du pneumatique est inférieure à, respectivement supérieure à ».

Radialement à l'extérieur de l'armature de sommet, on trouve la bande de roulement habituellement constituée de matériaux polymériques destinés à venir au contact du sol dans l'aire de contact entre le sol et le pneumatique.

Il est connu de pourvoir la bande de roulement, c'est-à-dire la partie du pneumatique destinée à venir en contact avec le sol lors du roulage et à s'user lors du roulage, d'une sculpture formée d'éléments en relief délimités par des découpures telles que des rainures, qu'elles soient d'orientation circonférentielle, transversale ou oblique. L'objectif d'une telle sculpture est de conférer à la bande de roulement de bonnes performances en roulage sur chaussée sèche et sur chaussée revêtue d'eau notamment par temps de pluie.

Pour améliorer les performances des bandes de roulement sans toutefois trop abaisser les rigidités de cisaillement desdites bandes, il est connu de former sur la surface de roulement une pluralité d'arêtes orientées transversalement ou en oblique afin de couper la pellicule d'eau sur une chaussée pour assurer un bon contact entre la bande de roulement et la chaussée. Un moyen d'obtention de telles arêtes consiste à pourvoir la bande avec une pluralité de découpures, ces découpures ayant la forme de rainures ou la forme d'incisions. On distingue, dans la présente demande, les incisions des rainures en ce que les incisions ont une largeur appropriée pour permettre pendant le roulage un contact au moins partiel entre les parois en vis-à-vis délimitant ces incisions et notamment au cours du passage dans le contact avec le sol, ce qui ne saurait être le cas pour les rainures dans les conditions normales d'usage du pneu.

Au sens de l'invention, une découpure d'orientation longitudinale est une découpure dont le plan moyen d'au moins une partie des parois de ladite découpure forme un angle avec un plan longitudinal inférieur à 10°. Cet angle formé avec un plan longitudinal peut être orienté dans un sens ou dans l'autre par rapport audit plan longitudinal. Une découpure d'orientation longitudinale peut encore être une découpure dont les parois ondulent ou zigzaguent autour d'un plan moyen tel qu'il vient d'être décrit.

Au sens de l'invention, une découpure d'orientation transversale est une découpure dont le plan moyen d'au moins une partie des parois de ladite découpure forme un angle avec un plan radial inférieur à 35°. Cet angle formé avec un plan radial peut être orienté dans un sens ou dans l'autre par rapport audit plan radial. Une découpure d'orientation transversale peut encore être une découpure dont les parois ondulent ou zigzaguent autour d'un plan moyen tel qu'il vient d'être décrit.

Au sens de l'invention, une découpure d'orientation oblique est une découpure dont le plan moyen d'au moins une partie des parois de ladite découpure forme un angle avec un plan radial compris entre 35° et 80°. Cet angle formé avec un plan radial peut être orienté dans un sens ou dans l'autre par rapport audit plan radial. Une découpure d'orientation oblique peut encore être une découpure dont les parois ondulent ou zigzaguent autour d'un plan moyen tel qu'il vient d'être décrit.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet un accroissement du nombre de kilomètres parcourus, l'usure du pneumatique étant moindre.

Afin d'augmenter encore la durée de vie des pneumatiques, il est usuel de choisir des matériaux polymériques constitutifs de la bande de roulement présentant des propriétés de résistance en usure améliorées. De tels matériaux sont par contre connus pour pénaliser les propriétés d'adhérence notamment sur sol humide.

De tels pneumatiques sont par exemple décrits dans le document US 6,247,512. Ce document décrit la superposition de deux couches de matériaux pour former la bande de roulement, le matériau externe venant au contact du sol étant notamment plus performant en termes d'usure.

Le document EP 3 031 622 A1 décrit un pneumatique comportant un indicateur d'usure coloré.

Le document EP 3 103 657 A1 décrit une sculpture d'un pneumatique combinant rainures et incisions pour limiter les phénomènes d'usure irrégulière.

L'article de Mortazavian Seyyedvahid et Al « effects of fiber orientation and anisotropy on tensile strength and elastic modulus of short fiber reinforced polymer composites" publié le 8 décembre 2014 dans Science Direct- composites :Part B, pages 1-14 (XP55821290) présente une étude sur l'effet de la présence de fibres de verre sur les propriétés mécaniques de matériaux thermoplastiques.

Le document WO 02/090094 A1 décrit un pneumatique comportant une bande de roulement constituée de plusieurs couches de mélanges élastomériques radialement superposées séparées localement par des intercalaires pour faciliter le recreusage de la bande de roulement.

Le document US 6 472 461 B1 décrit un pneumatique dont la bande de roulement comporte des fibres textiles pour améliorer des propriétés de freinage sur sol humide ou sur glace.

Les inventeurs se sont donnés pour mission d'être en mesure de fournir des pneumatiques autorisant une distance de roulage toujours plus importante avec des propriétés d'adhérence sur sol humide améliorées.

Ce but a été atteint selon l'invention par un pneumatique, à armature de carcasse radiale, comprenant une armature de sommet, elle-même coiffée radialement d'une bande de roulement réunie à deux bourrelets par l'intermédiaire de deux flancs, ladite bande de roulement comportant des rainures formant au moins un élément de sculpture, ladite bande de roulement comportant au moins une couche de mélange élastomérique formant la surface de roulement du pneumatique, ladite au moins une couche de mélange élastomérique étant renforcée par des fibres non métalliques disposées sensiblement parallèlement à la surface extérieure de la bande de roulement, au moins 40% des fibres non métalliques étant orientées selon une direction faisant un angle inférieur à 30° par rapport l'axe principal d'inertie associé au moment d'inertie maximal de la surface en contact avec le sol dudit au moins un élément de sculpture, le milieu de ladite surface en contact avec le sol, suivant la direction longitudinale passant par le centre de gravité de ladite surface en contact avec le sol, étant situé longitudinalement au centre de l'aire de contact, le pneumatique étant soumis à sa charge nominale et gonflé à sa pression nominale sur la jante nominale et la valeur du module d'élasticité longitudinale à température ambiante de ladite au moins une couche de mélange élastomérique, mesurée selon au moins une direction parallèle à la surface de roulement étant supérieure à 5 fois la valeur du module d'élasticité longitudinale à température ambiante de ladite au moins une couche de mélange élastomérique mesurée selon la direction perpendiculaire à la surface de roulement.

De préférence selon l'invention, la valeur du module d'élasticité longitudinale à température ambiante de ladite au moins une couche de mélange élastomérique, mesurée selon au moins une direction parallèle à la surface de roulement est inférieure à 20 fois la valeur du module d'élasticité longitudinale à température ambiante de ladite au moins une couche de mélange élastomérique mesurée selon la direction perpendiculaire à la surface de roulement et de préférence encore inférieure à 10 fois la valeur du module d'élasticité longitudinale à température ambiante de ladite au moins une couche de mélange élastomérique mesurée selon la direction perpendiculaire à la surface de roulement.

Au sens de l'invention, les conditions nominales de charge et de pression ainsi que la jante nominale sont définies selon les règlements ETRTO, TRA ou JATMA.

Le module d'élasticité longitudinale est mesuré selon la norme NF ISO 37 de Décembre 2005 sur une éprouvette haltère de type 2 par mesure du module d'élasticité à 5% de déformation à 23°C.

La mesure d'angle des fibres courtes au sein de la bande de roulement se fait sur un échantillon prélevé sur la bande de roulement, préférentiellement en ôtant la moitié de la largeur d'une nervure suivant un plan parallèle à la surface de roulement, de manière à faire apparaître une interface contenant les fibres courtes, puis en prélevant une éprouvette matériau par une découpe de la bande de roulement selon un plan parallèle à la surface de roulement. Un histogramme d'orientation des fibres par rapport à la direction longitudinale est établi sur l'éprouvette par microscopie optique en réflexion sur un échantillon d'au moins 100 fibres conformément aux préconisations que l'on trouve dans « Orientation des fibres courtes dans les pièces en thermoplastique renforcé - Observation de l'orientation des fibres », Techniques de l'ingénieur, Référence AM3729, 10 juillet 2003, Michel VINCENT.

Selon un mode de réalisation préféré de l'invention, ledit au moins un mélange élastomérique renforcé de fibres non métalliques présente une valeur de tan(δ)-20°C strictement inférieure à 0.50.

La propriété dynamique tan(δ)-20°C est mesurée sur un viscoanalyseur (Metravib VA4000), selon la norme ASTM D 5992-96. On enregistre la réponse d'une éprouvette constituée de deux pastilles cylindriques de 2 mm d'épaisseur chacune et d'un centimètre de diamètre (l'éprouvette est réalisée à partir d'un prélèvement sur pneumatique réalisé à mi-hauteur de la couche concernée au plus près de la zone du plan équatorial dans une zone d'épaisseur suffisante pour constituer l'éprouvette), soumis à une sollicitation sinusoïdale en cisaillement simple alterné, à la fréquence de 10Hz.

Pour la mesure de tan(δ)-20°C, on effectue un balayage en température entre -80 et +100°C, sous une contrainte de 0,7MPa, et on enregistre la valeur de tan(δ) observée à -20°C. On rappelle que de manière bien connue de l'homme du métier, la valeur est représentative du potentiel d'adhérence sur sol mouillé: plus la valeur de tan(δ)-20°C est élevée, meilleure est l'adhérence. Une valeur arbitraire de 100 est donnée pour la composition témoin, un résultat supérieur à 100 indiquant une augmentation de la valeur de tan(δ)-20°C, correspondant à une amélioration de la performance d'adhérence sur sol mouillé.

L'adhérence d'un pneumatique est caractérisée par l'effort que le pneumatique est capable de transmettre au sol sous une sollicitation de freinage par exemple. Elle est en particulier représentée par les pertes hystérétiques liées aux déformations de la bande de roulement lors de l'application de la sollicitation. La valeur de tan(δ)-20°C correspond ainsi à un indicateur de l'adhérence sur sol humide d'un pneumatique en freinage entre 80km/h et 0km/h.

Les différentes mesures sont effectuées sur des pneumatiques neufs, n'ayant encore effectué aucun roulage.

Les inventeurs ont su mettre en évidence que le mélange élastomérique renforcé par des fibres non métalliques tel que décrit précédemment conduit à un compromis satisfaisant entre les propriétés de résistance à l'usure et les propriétés d'adhérence sur sol humide du pneumatique.

En effet, le mélange élastomérique constituant la partie radialement extérieure de la bande de roulement présente une rigidité mesurée selon la direction perpendiculaire à la surface de roulement lui conférant des performances en usure satisfaisante.

La présence des fibres dans ce mélange élastomérique selon l'orientation décrite précédemment conférant une rigidité au mélange telle que décrite précédemment conduisent lors de l'écrasement du pneumatique dans l'aire de contact à une moindre déformation de la bande de roulement du pneumatique. Les inventeurs ont su mettre en évidence que la présence des fibres non métalliques telles que décrites limitent les déformations dites transverses liées à l'incompressibilité du mélange élastomérique constituant la partie radialement extérieure de la bande de roulement. Les inventeurs ont encore su mettre en évidence que les déformations des couches de mélanges élastomériques qui forment la bande de roulement du pneumatique induisent des efforts dits parasites dans l'aire de contact. Ces efforts dits parasites, décrits dans « Effect of friction on rolling tire - pavement interaction », H. Wang, I. L. Al-Qadi & I. Stanciulescu, NEXTRANS Project No. 049IY02, USDOT Region V Regional University Transportation Center Final Report, réduisent d'autant la quantité d'effort transmissible dans l'aire de contact avant d'atteindre l'effort maximal transmissible caractérisé par le glissement du pneumatique sur le sol. Autrement dit ces efforts dits parasites consomment une partie du potentiel d'adhérence. La présence des fibres non métalliques dans ce mélange élastomérique qui limitent les déformations de la bande de roulement contribue ainsi à une meilleure adhérence du pneumatique.

De préférence selon l'invention, les fibres non métalliques présentent une longueur moyenne comprise entre 0.5 et 10 mm, et de préférence encore comprise entre 2 et 5 mm.

La mesure de la longueur des fibres courtes est réalisée selon l'invention par microscopie optique à l'aide d'une analyse optique automatisée selon la norme ISO 16065 ou par l'une des méthodes décrites dans « A REVIEW OF IMAGE ANALYSIS BASED METHODS TO EVALUATE FIBER PROPERTIES », Ulrich Hirn et Wolfgang Bauer, Lenzinger Berichte, 86 (2006) 96-105.

De préférence selon l'invention, les fibres non métalliques présentent une épaisseur moyenne comprise entre 5 et 40 µm, et de préférence encore comprise entre 10 et 30 µm.

La mesure de l'épaisseur des fibres courtes est réalisée selon l'invention par microscopie optique à l'aide d'une analyse optique automatisée selon la norme ISO 16065 ou par l'une des méthodes décrites dans « A REVIEW OF IMAGE ANALYSIS BASED METHODS TO EVALUATE FIBER PROPERTIES », Ulrich Hirn et Wolfgang Bauer, Lenzinger Berichte, 86 (2006) 96-105.

Avantageusement selon l'invention, le facteur de forme des fibres non métalliques, c'est-à-dire le rapport entre la longueur et l'épaisseur des fibres, est compris entre 12,5 et 2000. Avantageusement encore, le facteur de forme est compris entre 50 et 1500, et de préférence encore entre 100 et 1000.

Les fibres non métalliques peuvent avoir toute section connue, par exemple cubique, cylindrique, étoilée. De préférence selon l'invention, les fibres ont une section cylindrique. Dans ce cas, l'épaisseur correspond au diamètre des fibres courtes.

Selon une variante de réalisation préférée de l'invention, le module de Young des fibres non métalliques est compris entre 0,5 et 500 GPa, de préférence entre 0,5 et 200 GPa, et de préférence encore entre 0,5 et 50 GPa.

Le module de Young des fibres courtes est mesuré selon l'invention conformément à la norme ASTM D885.

Selon mode de réalisation avantageux de l'invention, les fibres non métalliques sont présentes dans la couche de mélange élastomérique formant la surface de roulement du pneumatique avec une teneur comprise entre 2.5 et 10 % volumique, et de préférence entre 5 et 7.5 % volumique.

Au sens de l'invention, la teneur en fibres d'un mélange élastomérique, exprimée en pourcentage volumique est déterminée en utilisant une méthode de tomographie aux rayons X telle que décrite dans la thèse « Imagerie multi-résolution par tomographie aux rayons X : application à la tomographie locale en science des matériaux », Tao Zhang, Université de Grenoble, 2012 (NNT : 2012GRENI020. tel-00876871). L'homme du métier sait ensuite utiliser les paramètres d'acquisition, les filtres et traitement d'images adaptés pour identifier les fibres au sein de la matrice ainsi que le volume correspondant, et ainsi déterminer le taux volumique desdites fibres.

Avantageusement selon l'invention, les fibres non métalliques sont choisies parmi les fibres naturelles telles que le coton, le lin, le chanvre, le bambou, ... Un tel choix présente l'avantage d'éléments de renforcement qui disparaitront par biodégradabilité lorsque lors de l'usure de la bande de roulement du pneumatique ils sont libérés dans la nature.

Selon un mode de réalisation de l'invention, le mélange élastomérique formant la surface de roulement du pneumatique comporte des fibres non-métalliques, selon deux orientations principales sensiblement perpendiculaires l'une par rapport à l'autre de sorte que les valeurs de module d'élasticité longitudinale à température ambiante mesurées selon au moins deux directions parallèles à la surface de roulement sont supérieures à 5 fois la valeur de module d'élasticité longitudinale à température ambiante mesurée selon la direction perpendiculaire à la surface de roulement.

Selon ce mode de réalisation de l'invention, pour déterminer l'orientation des fibres, on effectue une succession de découpes parallèlement à la surface de roulement, de manière à faire apparaître les fibres et établir l'histogramme d'orientation des fibres dans ces plans parallèle à la surface de roulement par rapport à la direction longitudinale par microscopie optique en réflexion sur un échantillon d'au moins 100 fibres conformément aux préconisations que l'on trouve dans « Orientation des fibres courtes dans les pièces en thermoplastique renforcé - Observation de l'orientation des fibres », Techniques de l'ingénieur, Référence AM3729, 10 juillet 2003, Michel VINCENT.

Selon ce mode de réalisation, pour effectuer les mesures du module d'élasticité longitudinale, on extrait de la bande de roulement au moins deux éprouvettes d'1 mm d'épaisseur, dans un plan parallèle à la surface de roulement, suivant lesdites deux orientations principales sensiblement perpendiculaires l'une par rapport à l'autre, ainsi qu'une éprouvette de 1 mm d'épaisseur dans un plan perpendiculaire à la surface de roulement et de direction perpendiculaire à la surface de roulement.

Selon un mode de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres modes de réalisation de l'invention, l'armature de sommet comporte encore au moins une couche d'éléments de renforcement circonférentiels.

Une réalisation de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description d'exemples de réalisation de l'invention en référence aux figures1à 4 qui représentent :
- figure 1, une vue méridienne d'un schéma d'un pneumatique selon un mode de réalisation de l'invention,
- figure 2, une vue d'une représentation schématique de l'aire de contact d'un pneumatique,
- figure 3, une vue partielle d'une représentation schématique de l'aire de contact d'un pneumatique illustrant les directions associées au moment d'inertie maximal et au moment d'inertie minimal d'un pain de sculpture d'un pneumatique,
- figure 4, une vue partielle d'une représentation schématique de l'aire de contact d'un pneumatique illustrant les directions associées au moment d'inertie maximal et au moment d'inertie minimal d'une nervure ou rib d'un pneumatique.

Les figures ne sont pas représentées à l'échelle pour en simplifier la compréhension.

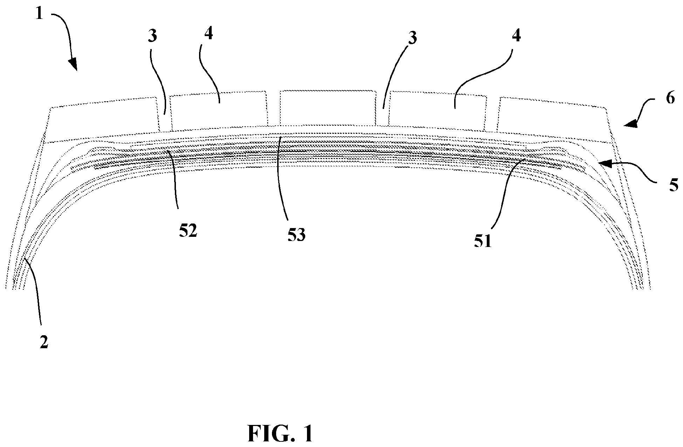

Sur la figure 1, le pneumatique 1, de dimension 315/70R22.5, comprend une armature de carcasse radiale 2 ancrée dans deux bourrelets, autour de tringles, non représentées. L'armature de carcasse 2 est formée d'une seule couche de câbles métalliques. L'armature de carcasse 2 est frettée par une armature de sommet 5, elle-même coiffée d'une bande de roulement 6. La bande de roulement comporte quatre rainures 3 formant cinq nervures ou ribs 4.

Les zones basses et bourrelets du pneumatique 1 ne sont notamment pas représentés sur les figures.

Sur la figure 1, l'armature de sommet 5 est formée radialement de l'intérieur à l'extérieur :
- d'une première couche de travail 51 formée de câbles métalliques inextensibles 11.35 non frettés, continus sur toute la largeur de la nappe, orientés d'un angle égal à 18°,
- d'une seconde couche de travail 52 formée de câbles métalliques inextensibles 11.35 non frettés, continus sur toute la largeur de la nappe, orientés d'un angle égal à 26° et croisés aux câbles métalliques de la première couche de travail,
- d'une couche de protection 53 formée de câbles métalliques élastiques 6.35 non frettés, continus sur toute la largeur de la nappe, orientés d'un angle égal à 26° dans le même sens que les câbles métalliques de la couche de travail 52.

Conformément à l'invention, la bande de roulement 6 est constituée d'une couche de mélange élastomérique dans laquelle sont noyées des fibres.

Le mélange élastomérique présente un module d'élasticité longitudinale à température ambiante, mesurée selon la direction perpendiculaire à la surface de roulement, égal à 5.2 MPa à 5 % de déformation.

Le mélange élastomérique présente une valeur de tan(δ)-20°C égale à 0.35.

Les fibres sont des fibres PET d'une longueur moyenne égale à 4 mm et présentant un diamètre moyen de 23 microns.

Le pourcentage volumique des fibres dans la couche de mélange élastomérique est de 5 %.

La bande de roulement est réalisé par superposition de couches de mélange élastomérique renforcé de fibres non métalliques de 2 mm d'épaisseur réalisées suivant la méthode décrite dans le brevet WO2017/109336. Les couches de mélange élastomérique renforcé sont orientées de manière que la direction préférentielle des fibres soit la direction axiale, et la bande de roulement est constituée en empilant un nombre de couches permettant d'atteindre l'épaisseur souhaitée.

Le module d'élasticité longitudinale à température ambiante à 5 % de déformation du mélange élastomérique renforcé de fibres non métalliques, mesuré selon la direction des fibres est égal à 49 MPa.

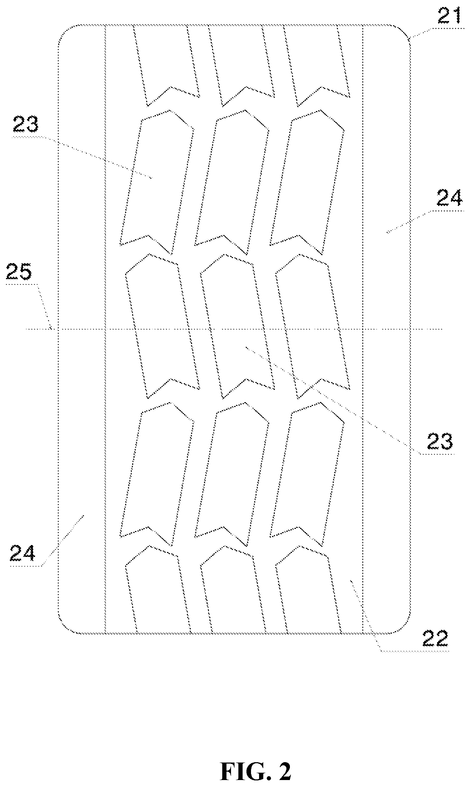

La figure 2 illustre schématiquement l'aire de contact 21 de la surface d'un pneumatique 22 au contact du sol, le pneumatique étant monté sur sa jante nominale, gonflé à sa pression nominale et soumis à sa charge nominale. Sur cette surface du pneumatique 22, on voit que la sculpture se compose dans la partie centrale selon une direction axiale de pains 23 entre deux nervures ou ribs circonférentiels 24 sur les parties axialement extérieures de la surface du pneumatique 22.

Sur cette figure 2 est encore illustré l'axe 25, orienté selon la direction axiale, longitudinalement au centre de l'aire de contact.

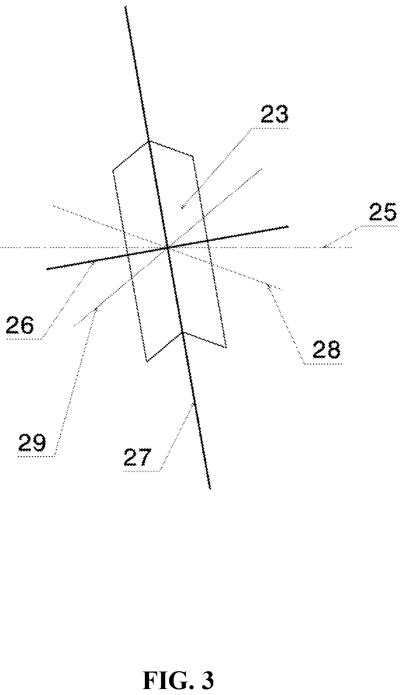

La figure 3 représente schématiquement un pain 23 de sculpture dont le milieu de la surface au contact du sol, suivant la direction longitudinale passant par le centre de gravité de la surface au contact du sol, est positionné longitudinalement au centre de l'aire de contact et donc sur l'axe 25. Les deux directions associées au moment d'inertie maximal (droite 26) et au moment d'inertie minimal (droite 27) de la surface du pain 23 en contact avec le sol sont également représentées sur cette figure 3. Autour de la direction associée au moment d'inertie maximal 26, est représentée la plage d'orientation des fibres non métalliques selon l'invention entre les deux droites 28, 29 placées respectivement à 30° de part et d'autre de la direction 26.

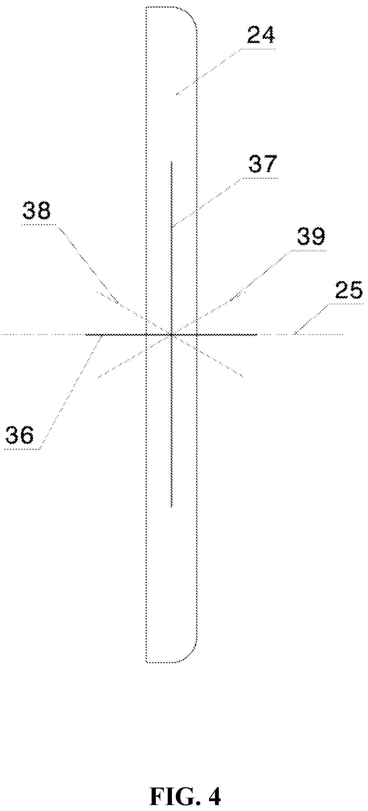

La figure 4 représente schématiquement une nervure ou rib 24 de sculpture. La nervure ou rib 24 étant continue circonférentiellement, le milieu de la surface au contact du sol, suivant la direction longitudinale passant par le centre de gravité de la surface au contact du sol, est continuellement positionné longitudinalement au centre de l'aire de contact et donc sur l'axe 25. Les deux directions associées au moment d'inertie maximal (droite 36) et au moment d'inertie minimal (droite 37) de la surface de la nervure ou rib 24 en contact avec le sol sont représentées sur cette figure 4. Autour de la direction associée au moment d'inertie maximal 36, est représentée la plage d'orientation des fibres non métalliques selon l'invention entre les deux droites 38, 39 placées respectivement à 30° de part et d'autre de la direction 36.

Dans le cas du pneumatique selon l'invention tel que représenté sur la figure 1, les fibres non métalliques sont orientées selon la direction axiale et forment donc un angle sensiblement nul avec la direction associée au moment d'inertie maximal de la surface des nervures ou ribs 4 en contact avec le sol.

Dans le cas d'un pneumatique dont la sculpture est semblable à celle de la figure 2, l'invention peut prévoir que l'orientation des fibres non métalliques varient selon le positionnement axial de la mesure. En d'autres termes, l'orientation des fibres non métalliques peut être prévue différemment selon que l'on se trouve dans un pain 23 ou dans une nervure ou rib 24 selon la figure 2.

Des pneumatiques ont été réalisés sur la base du mélange élastomérique A décrit ci-dessous avec ses propriétés.

| | Mélange A |
|---|---|
| NR | 70 |
| BR | 10 |
| SBR | 20 |
| N234 | 50 |
| Silice | 9 |
| Silane | 2 |
| 6PPD - 1.3DIMETHYL BUTYL PHENYL PARAPHENYLENE-DIAMINE | 3 |
| ZNO | 2.6 |
| SOUFRE | 1.5 |
| Accélérateur (CBS) | 1.15 |
| Module d'extension longitudinale à 5% de déformation et température ambiante (MPa) | 4 |
| tan(δ)-20°C | 0.35 |

Les valeurs des constituants sont exprimées en pce (parties en poids pour cent parties d'élastomères).

Un pneumatique de référence R réalisé selon une configuration correspondant à des réalisations usuelles et ne comportant pas de fibres dans la couche de mélange élastomérique formant la surface de roulement. La bande de roulement est réalisée avec le mélange A.

Un pneumatique T conforme à l'invention telle que représentée sur la figure 1 associe, pour former la bande de roulement, le mélange A qui forme la couche de mélange élastomérique formant la surface de roulement dans laquelle sont insérées les fibres tel que décrit précédemment.

Des mesures d'adhérence sur sol humide ont été effectuées sur chacun des pneumatiques dans des conditions de roulage identiques conformément à la norme ISO 15222. Les résultats des mesures sont présentés dans le tableau suivant, une valeur de 100 étant attribuée au pneumatique R. Des valeurs supérieures à 100 expriment une performance en adhérence supérieure.

| Pneumatique R | Pneumatique T |
|---|---|
| 100 | 103 |

Ces valeurs mettent en évidence l'intérêt de la présence des fibres non métalliques dans le mélange élastomérique formant la surface de roulement pour limiter les déformations de la bande de roulement lors du passage dans l'aire de contact induisant des efforts parasites au contact du sol, et ainsi contribuer à une meilleure adhérence du pneumatique sur sol humide.

Des essais d'usure ont été réalisés sur une piste simulant un circuit de type autoroutier. Des pneumatiques T conformes à l'invention sont comparés à des pneumatiques de référence R.

Les conditions de roulage sont identiques pour l'ensemble des pneumatiques ; une pression de gonflage de 9 bars et les pneumatiques sont soumis à une charge de 3750 kg, les pneumatiques équipant les deux positions d'un essieu directeur d'un véhicule poids lourd. Les vitesses moyennes de roulage sont égales à 70 km/h.

Dans le test d'usure réalisé sur piste, on mesure la perte de poids moyenne après un kilométrage donné. Les essais réalisés ont montré que pour une perte en poids identique, le pneumatique T selon l'invention a parcouru un kilométrage équivalent au kilométrage du pneumatique de référence R.

## Revendications

1. **-** Pneumatique (1), à armature de carcasse radiale (2), comprenant une armature de sommet (5), elle-même coiffée radialement d'une bande de roulement (6) réunie à deux bourrelets par l'intermédiaire de deux flancs, ladite bande de roulement (6) comportant des rainures formant au moins un élément de sculpture, ladite bande de roulement comportant au moins une couche de mélange élastomérique formant la surface de roulement du pneumatique, ladite au moins une couche de mélange élastomérique étant renforcée par des fibres non métalliques disposées sensiblement parallèlement à la surface extérieure de la bande de roulement, **caractérisé en ce qu'**au moins 40% des fibres non métalliques sont orientées selon une direction faisant un angle inférieur à 30° par rapport à l'axe principal d'inertie associé au moment d'inertie maximal de la surface en contact avec le sol dudit au moins un élément de sculpture, le milieu de ladite surface en contact avec le sol, suivant la direction longitudinale passant par le centre de gravité de ladite surface en contact avec le sol, étant situé longitudinalement au centre de l'aire de contact, le pneumatique étant soumis à sa charge nominale et gonflé à sa pression nominale sur la jante nominale et **en ce que** la valeur du module d'élasticité longitudinale à température ambiante de ladite au moins une couche de mélange élastomérique, mesurée selon au moins une direction parallèle à la surface de roulement est supérieure à 5 fois la valeur du module d'élasticité longitudinale à température ambiante de ladite au moins une couche de mélange élastomérique mesurée selon la direction perpendiculaire à la surface de roulement.

2. - Pneumatique (1) selon la revendication 1, **caractérisé en ce que** la valeur du module d'élasticité longitudinale à température ambiante de ladite au moins une couche de mélange élastomérique, mesurée selon au moins une direction parallèle à la surface de roulement est inférieure à 20 fois, et de préférence inférieure à 10 fois, la valeur du module d'élasticité longitudinale à température ambiante de ladite au moins une couche de mélange élastomérique mesurée selon la direction perpendiculaire à la surface de roulement.

3. - Pneumatique (1) selon l'une des revendications 1 ou 2, **caractérisé en ce que** le mélange élastomérique renforcé de fibres non métalliques de la couche formant la surface de roulement présente une valeur de tan(δ)-20°C strictement inférieure à 0.50.

4. - Pneumatique (1) selon l'une des revendications 1 à 3, **caractérisé en ce que** les fibres non métalliques présentent une longueur comprise entre 0.5 et 10 mm, et de préférence comprise entre 2 et 5 mm.

5. - Pneumatique (1) selon l'une des revendications 1 à 4, **caractérisé en ce que** les fibres non métalliques présentent une épaisseur moyenne comprise entre 5 et 40 µm, et de préférence comprise entre 10 et 30 µm.

6. - Pneumatique (1) selon l'une des revendications 1 à 5, **caractérisé en ce que** le facteur de forme des fibres non métallique, défini par le rapport entre la longueur et l'épaisseur des fibres, est compris entre 12,5 et 2000 et de préférence entre 100 et 1000.

7. - Pneumatique (1) selon l'une des revendications 1 à 6, **caractérisé en ce que** le module d'Young des fibres non métalliques est compris entre 0,5 et 500 GPa, et de préférence entre 0,5 et 50 GPa.

8. - Pneumatique (1) selon l'une des revendications précédentes, **caractérisé en ce que** les fibres non métalliques sont présentes dans la couche de mélange élastomérique formant la surface de roulement du pneumatique avec une teneur comprise entre 2.5 et 10 % volumique, et de préférence entre 5 et 7.5 % volumique.

9. - Pneumatique (1) selon l'une des revendications précédentes, **caractérisé en ce que** les fibres textiles sont choisies parmi les fibres naturelles telles que le coton, le lin, le chanvre, ou le bambou.

10. - Pneumatique (1) selon l'une des revendications précédentes, **caractérisé en ce que** ladite au moins une couche de mélange élastomérique comporte des fibres non-métalliques, selon deux orientations principales sensiblement perpendiculaires l'une par rapport à l'autre et **en ce que** les valeurs du module d'élasticité longitudinale à température ambiante de ladite au moins une couche de mélange élastomérique mesurées selon au moins deux directions parallèles à la surface de roulement sont supérieures à 5 fois la valeur du module d'élasticité longitudinale à température ambiante de ladite au moins une couche de mélange élastomérique mesurée selon la direction perpendiculaire à la surface de roulement.

## Patentansprüche

1. Reifen (1) mit radialer Karkassenbewehrung (2), eine Scheitelbewehrung (5) umfassend, die ihrerseits radial von einem Laufstreifen (6) bedeckt wird, der über zwei Seitenwände mit zwei Wülsten verbunden ist, wobei der Laufstreifen (6) Rillen aufweist, die mindestens ein Profilelement bilden, wobei der Laufstreifen mindestens eine Lage Elastomermischung aufweist, welche die Lauffläche des Reifens bildet, wobei die mindestens eine Lage Elastomermischung durch nichtmetallische Fasern verstärkt ist, die im Wesentlichen parallel zur Außenfläche des Laufstreifens angeordnet sind, **dadurch gekennzeichnet, dass** mindestens 40 % der nichtmetallischen Fasern in einer Richtung ausgerichtet sind, die einen Winkel von weniger als 30° bezüglich der Hauptträgheitsachse bildet, die dem maximalen Trägheitsmoment der Bodenkontaktfläche des mindestens einen Profilelements zugeordnet ist, wobei die Mitte der Bodenkontaktfläche in der durch den Schwerpunkt der Bodenkontaktfläche verlaufenden Längsrichtung sich längs im Mittelpunkt der Kontaktfläche befestigt, wenn der Reifen mit seiner Nennlast belastet ist und mit seinem Nenndruck auf der Auslegungsfelge aufgepumpt ist, und dadurch, dass der Wert des Längselastizitätsmoduls bei Umgebungstemperatur der mindestens einen Lage Elastomermischung, gemessen in mindestens einer zur Lauffläche parallelen Richtung, größer als das 5-Fache des Wertes des Längselastizitätsmoduls bei Umgebungstemperatur der mindestens einen Lage Elastomermischung, gemessen in der zur Lauffläche senkrechten Richtung, ist.

2. Reifen (1) nach Anspruch 1, **dadurch gekennzeichnet, dass** der Wert des Längselastizitätsmoduls bei Umgebungstemperatur der mindestens einen Lage Elastomermischung, gemessen in mindestens einer zur Lauffläche parallelen Richtung, kleiner als das 20-Fache und vorzugsweise kleiner als das 10-Fache des Wertes des Längselastizitätsmoduls bei Umgebungstemperatur der mindestens einen Lage Elastomermischung, gemessen in der zur Lauffläche senkrechten Richtung, ist.

3. Reifen (1) nach einem der Ansprüche 1 oder 2, **dadurch gekennzeichnet, dass** die mit nichtmetallischen Fasern verstärkte Elastomermischung der die Lauffläche bildenden Lage einen Wert von tan(δ)-20°C aufweist, der streng kleiner als 0,50 ist.

4. Reifen (1) nach einem der Ansprüche 1 bis 3, **dadurch gekennzeichnet, dass** die nichtmetallischen Fasern eine Länge zwischen 0,5 und 10 mm und vorzugsweise zwischen 2 und 5 mm aufweisen.

5. Reifen (1) nach einem der Ansprüche 1 bis 4, **dadurch gekennzeichnet, dass** die nichtmetallischen Fasern eine mittlere Dicke zwischen 5 und 40 µm und vorzugsweise zwischen 10 und 30 µm aufweisen.

6. Reifen (1) nach einem der Ansprüche 1 bis 5, **dadurch gekennzeichnet, dass** der Formfaktor der nichtmetallischen Fasern, der durch das Verhältnis zwischen der Länge und der Dicke der Fasern definiert ist, zwischen 12,5 und 2000 und vorzugsweise zwischen 100 und 1000 liegt.

7. Reifen (1) nach einem der Ansprüche 1 bis 6, **dadurch gekennzeichnet, dass** der Elastizitätsmodul der nichtmetallischen Fasern zwischen 0,5 und 500 GPa und vorzugsweise zwischen 0,5 und 50 GPa liegt.

8. Reifen (1) nach einem der vorhergehenden Ansprüche, **dadurch gekennzeichnet, dass** die nichtmetallischen Fasern in der die Lauffläche des Reifens bildenden Lage Elastomermischung mit einem Gehalt zwischen 2,5 und 10 Vol.-% und vorzugsweise zwischen 5 und 7,5 Vol.-% vorhanden sind.

9. Reifen (1) nach einem der vorhergehenden Ansprüche, **dadurch gekennzeichnet, dass** die textilen Fasern aus den Naturfasern wie Baumwolle, Lein, Hanf oder Bambus ausgewählt sind.

10. Reifen (1) nach einem der vorhergehenden Ansprüche, **dadurch gekennzeichnet, dass** die mindestens eine Lage Elastomermischung nichtmetallische Fasern mit zwei Hauptausrichtungen aufweist, die im Wesentlichen zueinander senkrecht sind, und dadurch, dass die Werte des Längselastizitätsmoduls bei Umgebungstemperatur der mindestens einen Lage Elastomermischung, gemessen in mindestens zwei zur Lauffläche parallelen Richtungen, größer als das 5-Fache des Wertes des Längselastizitätsmoduls bei Umgebungstemperatur der mindestens einen Lage Elastomermischung, gemessen in der zur Lauffläche senkrechten Richtung, sind.

## Claims

1. - Tyre (1), with radial carcass reinforcement (2), comprising a crown reinforcement (5), itself capped radially with a tread (6) joined to two beads via two sidewalls, said tread (6) comprising grooves forming at least one tread pattern element, said tread comprising at least one layer of elastomeric compound forming the tread surface of the tyre, said at least one layer of elastomeric compound being reinforced with non-metallic fibres arranged substantially parallel to the outer surface of the tread, **characterized in that** at least 40% of the non-metallic fibres are oriented in a direction forming an angle of less than 30° with respect to the main axis of inertia associated with the maximum moment of inertia of the surface in contact with the ground of said at least one tread pattern element, the centre of said surface in contact with the ground, in the longitudinal direction passing through the centre of gravity of said surface in contact with the ground, being located longitudinally at the centre of the contact patch, the tyre being subjected to its nominal load and inflated to its nominal pressure on the nominal rim, and **in that** the value of the longitudinal modulus of elasticity at ambient temperature of said at least one layer of elastomeric compound, measured in at least one direction parallel to the tread surface, is greater than 5 times the value of the longitudinal modulus of elasticity at ambient temperature of said at least one layer of elastomeric compound measured in the direction perpendicular to the tread surface.

2. - Tyre (1) according to Claim 1, **characterized in that** the value of the longitudinal modulus of elasticity at ambient temperature of said at least one layer of elastomeric compound, measured in at least one direction parallel to the tread surface, is less than 20 times, and preferably less than 10 times, the value of the longitudinal modulus of elasticity at ambient temperature of said at least one layer of elastomeric compound measured in the direction perpendicular to the tread surface.

3. - Tyre (1) according to one of Claims 1 or 2, **characterized in that** the elastomeric compound reinforced with non-metallic fibres of the layer forming the tread surface has a value of tan(δ)-20°C strictly less than 0.50.

4. - Tyre (1) according to one of Claims 1 to 3, **characterized in that** the non-metallic fibres have a length between 0.5 and 10 mm, and preferably between 2 and 5 mm.

5. - Tyre (1) according to one of Claims 1 to 4, **characterized in that** the non-metallic fibres have an average thickness between 5 and 40 µm, and preferably between 10 and 30 µm.

6. - Tyre (1) according to one of Claims 1 to 5, **characterized in that** the form factor of the non-metallic fibres, defined by the ratio between the length and the thickness of the fibres is between 12.5 and 2000 and preferably between 100 and 1000.

7. - Tyre (1) according to one of Claims 1 to 6, **characterized in that** the Young's modulus of the non-metallic fibres is between 0.5 and 500 GPa, and preferably between 0.5 and 50 GPa.

8. - Tyre (1) according to one of the preceding claims, **characterized in that** the non-metallic fibres are present in the layer of elastomeric compound forming the tread surface of the tyre with a content of between 2.5 and 10% by volume, and preferably of between 5 and 7.5% by volume.

9. - Tyre (1) according to one of the preceding claims, **characterized in that** the textile fibres are chosen from natural fibres such as cotton, linen, hemp, or bamboo.

10. - Tyre (1) according to one of the preceding claims, **characterized in that** said at least one layer of elastomeric compound comprises non-metallic fibres, in two main orientations substantially perpendicular to each other, and **in that** the values of the longitudinal modulus of elasticity at ambient temperature of said at least one layer of elastomeric compound measured in at least two directions parallel to the tread surface are greater than 5 times the value of the longitudinal modulus of elasticity at ambient temperature of said at least one layer of elastomeric compound measured in the direction perpendicular to the tread surface.
